# EUROPEAN PATENT SPECIFICATION

(11) **EP 4 377 838 B1**
(45) Date of publication and mention of the grant of the patent: **27.05.2026**
(21) Application number: 21951733.1
(22) Date of filing: 27.07.2021
(51) Int. Cl.: G06T 7/70, G06N 3/02, G06T 3/40

(54) **TWO-DIMENSIONAL POSE ESTIMATIONS**
ZWEIDIMENSIONALE POSENSCHÄTZUNGEN
ESTIMATIONS DE POSE BIDIMENSIONNELLES

(43) Date of publication of application: 05.06.2024
(73) Proprietor: Hinge Health, Inc., San Francisco, California 94105 (US)
(72) Inventor: ROUGIER, Caroline, Montréal, Québec H4R 3H8 (CA); CHO, Dong Wook, Pierrefonds, Québec H9A 1E6 (CA)
(74) Representative: Keltie LLP
(86) International application number: PCT/IB2021/056819
(87) International publication number: WO 2023/007215

(56) References cited:
- EP-A1- 3 547 211
- WO-A1-2019/155658
- CA-A1- 2 995 242
- CN-A- 106 650 699
- US-A1- 2018 268 220
- US-A1- 2019 311 223
- JUN JINYOUNG ET AL: "Human Pose Estimation Using Skeletal Heatmaps", 2020 ASIA-PACIFIC SIGNAL AND INFORMATION PROCESSING ASSOCIATION ANNUAL SUMMIT AND CONFERENCE (APSIPA ASC), 10 December 2020 (2020-12-10), pages 1287 - 1292, XP093254087
- JINGDONG WANG ET AL: "Deep High-Resolution Representation Learning for Visual Recognition", ARXIV.ORG, CORNELL UNIVERSITY LIBRARY, 201 OLIN LIBRARY CORNELL UNIVERSITY ITHACA, NY 14853, 20 August 2019 (2019-08-20), XP081620505
- MARK SANDLER ET AL: "Inverted Residuals and Linear Bottlenecks: Mobile Networks for Classification, Detection and Segmentation", ARXIV.ORG, CORNELL UNIVERSITY LIBRARY, 201 OLIN LIBRARY CORNELL UNIVERSITY ITHACA, NY 14853, 13 January 2018 (2018-01-13), XP080852659

## Description

### BACKGROUND

Object identifications in images may be used for multiple purposes. For example, objects may be identified in an image for use in other downstream application. In particular, the identification of an object may be used for tracking the object, such as a player on a sport field, to follow the player's motions and to capture the motions for subsequent playback or analysis.

The identification of objects in images and videos may be carried out with methods such as edge-based segmentation detection and other computer vision methods. Such methods may be used to separate objects, especially people, to estimate poses in two-dimensions for use in various applications, such as three-dimensional reconstruction, object-centric scene understanding, surveillance, and action recognition.

A skeletal attention module to generate keypoint heatmaps, which exploits skeletal, as well as overall body structure information for human pose estimation by adding augmenting convolutional layers to an existing deep neural network, i.e., HRNet, is proposed in the study of Jun Jinyoung et al.: "Human Pose Estimation Using Skeletal Heatmaps", 2020 Asia-Pacific Signal and Information Processing Association Annual Summit and Conference (APSIPA ASC), published10 December 2020

High-Resolution Network (HRNet) connecting high-to-low resolution convolution streams in parallel and repeatedly exchanging the information across resolutions is suggested in the study of Jingdong Wang et al.: "Deep High-Resolution Representation Learning for Visual Recognition",arXiv.org, published 20 August 2019.

### BRIEF DESCRIPTION OF THE DRAWINGS

Reference will now be made, by way of example only, to the accompanying drawings in which:
- Figure 1: is a schematic representation of the components of an example apparatus to generate two-dimensional pose estimations from raw images with multiple objects;
- Figure 2: is a flowchart of an example of a method of generating two-dimensional pose estimations from raw images with multiple objects;
- Figure 3: is a schematic representation of an architecture for two-dimensional pose estimation;
- Figure 4: is an example of raw data representing an image received at the apparatus of figure 1;
- Figure 5: is a representation of a person in an A-pose to illustrate the joints and bones used by the apparatus of figure 1;
- Figure 6A: is a joint heatmap of a combination of a plurality of predefined joints; and
- Figure 6B: is an exemplary bone heatmap a bone connecting the neck and right hip.

### DETAILED DESCRIPTION

As used herein, any usage of terms that suggest an absolute orientation (e.g. "top", "bottom", "up", "down", "left", "right", "low", "high", etc.) may be for illustrative convenience and refer to the orientation shown in a particular figure. However, such terms are not to be construed in a limiting sense as it is contemplated that various components will, in practice, be utilized in orientations that are the same as, or different than those described or shown.

Object identifications in images may be used for multiple purposes. For example, objects may be identified in an image for use in other downstream application. In particular, the identification of an object may be used for tracking the object, such as a player on a sport field, to follow the player's motions and to capture the motions for subsequent playback or analysis.

The estimation of two-dimensional poses may be carried out using a convolutional neural network. Pose estimation may include the localizing of joints used to reconstruct a two-dimensional skeleton of an object in an image. The skeleton may be defined by joints and/or bones which may be determined using joint heatmaps and bone heatmaps. The architecture of the convolutional neural network is not particularly limited and the convolutional neural network may use a feature extractor to identify features in a raw image which may be used for further processing. For example, a feature extractor developed and trained by the Visual Geometry Group (VGG) can be used. While the VGG backbone may produce high quality data, the operation of the VGG feature extractor is heavy and slow.

In other examples, different architectures may be used. For example, a residual network (ResNet) architecture may also be used in some examples. As another example, a MobileNet architecture may also be used to improve speed at the cost of decreased accuracy.

An apparatus and method of using an efficient architecture for two-dimensional pose estimation is provided. As an example, the apparatus may be a backbone for feature extraction that use of mobile inverted bottleneck blocks. In the present example, features from different outputs may be gathered to improve multi-scale performance to detect objects at different depths of the two-dimensional raw image. In some examples, the apparatus may further implement a multi-stage refinement process to generate joints and bone maps for output.

In the present description, the models and techniques discussed below are generally applied to a person. It is to be appreciated by a person of skill with the benefit of this description that the examples described below may be applied to other objects as well such as animals and machines.

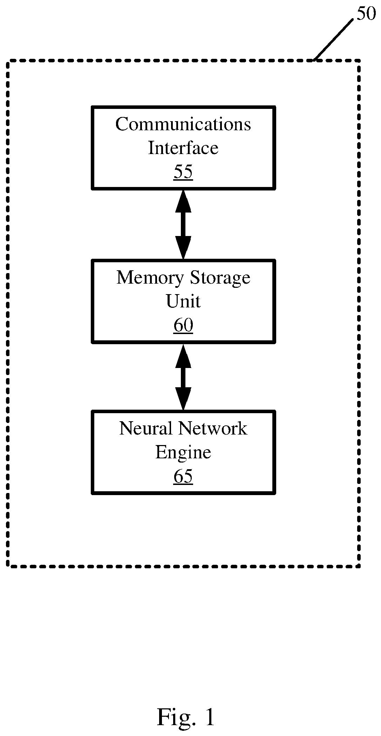

Referring to figure 1, a schematic representation of an apparatus to generate two-dimensional pose estimations from raw images with multiple objects is generally shown at 50. The apparatus 50 may include additional components, such as various additional interfaces and/or input/output devices such as indicators to interact with a user of the apparatus 50. The interactions may include viewing the operational status of the apparatus 50 or the system in which the apparatus 50 operates, updating parameters of the apparatus 50, or resetting the apparatus 50. In the present example, the apparatus 50 is to receive raw data, such as an image in RGB format, and to process the raw data to generate output that includes two-dimensional pose estimations of objects, such as people, in the raw data. The output is not particularly limited and may include a joint heatmap and/or a bone heatmap. In the present example, the apparatus 50 includes a communications interface 55, a memory storage unit 60, and a neural network engine 65.

The communications interface 55 is to communicate with an external source to receive raw data representing a plurality of objects in an image. Although the raw data representing the image is not particularly limited, it is to be appreciated that the apparatus 50 is generally configured to handle complex images with multiple objects, such as people, in different poses and different depths. In addition, the image may include objects that are partially occluded to complicate the identification of objects in the image. The occlusions are not limited and in some cases, the image may include many objects such that the objects occlude each other or itself. In other examples, the object may involve occlusions caused by other features for which a pose estimation is not made. In further examples, the object may involve occlusions caused by characteristics of the image, such as the border.

In the present example, the raw data may be a two-dimensional image of objects. The raw data may also be resized from an original image captured by a camera due to computational efficiencies or resources required for handling large images files. In the present example, the raw data may be an image file 456x 256 pixels downsized from an original image of 1920x1080 pixels. The manner by which the objects are represented and the exact format of the two-dimensional image is not particularly limited. In the present example, the two-dimensional image may be received in an RGB format. It is to be appreciated by a person of skill in the art with the benefit of this description that the two-dimensional image be in a different format, such as a raster graphic file or a compressed image file captured and processed by a camera.

The manner by which the communications interface 55 receives the raw data is not limited. In the present example, the communications interface 55 communicates with external source over a network, which may be a public network shared with a large number of connected devices, such as a WiFi network or cellular network. In other examples, the communications interface 55 may receive data from an external source via a private network, such as an intranet or a wired connection with other devices. In addition, the external source from which the communications interface 55 receives the raw data is not limited to any type of source. For example, the communications interface 55 may connect to another proximate portable electronic device capturing the raw data via a Bluetooth connection, radio signals, or infrared signals. As another example, the communications interface 55 is to receive raw data from a camera system or an external data source, such as the cloud. The raw data received via the communications interface 55 is generally to be stored on the memory storage unit 60.

In another example, the apparatus 50 may be part of a portable electronic device, such as a smartphone, that includes a camera system (not shown) to capture the raw data. Accordingly, in this example, the communications interface 55 may include the electrical connections within the portable electronic device to connect the apparatus 50 portion of the portable electronic device with the camera system. The electrical connections may include various internal buses within the portable electronic device.

Furthermore, the communications interface 55 may be used to transmit results, such joint heatmaps and/or bone heatmaps that may be used to estimate the pose of the objects in the original image. Accordingly, the apparatus 50 may operate to receive raw data from an external source representing multiple objects with complex occlusions where two-dimensional poses are to be estimated. The apparatus 50 may subsequently provide the output to the same external source or transmit the output to another device for downstream processing.

The memory storage unit 60 is to store the raw data received via the communications interface 55. In particular, the memory storage unit 60 may store raw data including two-dimensional images representing multiple objects with complex occlusions for which a pose is to be estimated. In the present example, the memory storage unit 60 may store a series of two-dimensional images to form a video. Accordingly, the raw data may be video data representing movement of various objects in the image. As a specific example, the objects may be images of people having different sizes and may include the people in different poses showing different joints and having some portions of the body occlude other joints and portions of the body. For example, the image may be of sport scene where multiple players are captured moving about in normal game play. It is to be appreciated by a person of skill that in such a scene, each player may occlude another player. In addition, other objects, such as a game piece or arena fixture may further occlude the players. Although the present examples relate to a two-dimensional image of one or more humans, it is to be appreciated with the benefit of this description that the examples may also include images that represent different types of objects, such as an animal or a machine that may be in various poses. For example, the image may represent an image capture of a grassland scene with multiple animals moving about or of a construction site where multiple pieces of equipment may be in different poses.

In addition to raw data, the memory storage unit 60 may also be used to store data to be used by the apparatus 50. For example, the memory storage unit 60 may store various reference data sources, such as templates and model data, to be used by the neural network engine 65. The memory storage unit 60 may also be used to store results from the neural network engine 65. In addition, the memory storage unit 60 may be used to store instructions for general operation of the apparatus 50. The memory storage unit 60 may also store an operating system that is executable by a processor to provide general functionality to the apparatus 50 such as functionality to support various applications. The memory storage unit 60 may additionally store instructions to operate the neural network engine 65 to carry out a method of two-dimensional pose estimation. Furthermore, the memory storage unit 60 may also store control instructions to operate other components and any peripheral devices that may be installed with the apparatus 50, such cameras and user interfaces.

In the present example, the memory storage unit 60 is not particularly limited and may include a non-transitory machine-readable storage medium that may be any electronic, magnetic, optical, or other physical storage device. The memory storage unit 60 may be preloaded with data or instructions to operate components of the apparatus 50. In other examples, the instructions may be loaded via the communications interface 55 or by directly transferring the instructions from a portable memory storage device connected to the apparatus 50, such as a memory flash drive. In other examples, the memory storage unit 60 may be an external unit such as an external hard drive, or a cloud service providing content.

The neural network engine 65 is to receive or retrieve the raw data stored in the memory storage unit 60. In the present example, the neural network engine 65 applies an initial series of inverted residual blocks to the raw data to extract a set of features. The initial series of inverted residual blocks is not particularly limited and may be any convolution capable of extracting low level features such as edges in the image. In particular, the initial convolution may be carried out on the initial STEM outputs to extract low level features such as edges in the image. In the present example, the initial convolution involves applying a 3x3 filter to carry out a strided convolution with a stride of two to the raw data image. Accordingly, the raw data will be downsampled to generate output with a lower resolution. In the present example, a raw data image may include an image with a resolution of 456x256 pixels and downsampled to a 228x128 pixel image. It is to be appreciated that a set of features may be extracted from this image, such as low level features.

In other examples, it is to be understood that the parameters may be modified. For example, the initial convolution may involve applying a 5x5 filter to carry out a strided convolution with a stride of two to the raw data image. Other filters may also be used, such as a 7x7 filter. Furthermore, although a strided convolution is used in the present example to downsample, it is to be appreciated by a person of skill that other methods of downsampling may also be used such as applying a 2x2 pooling operation with a stride of two.

The neural network engine 65 further processes the data by continuing to apply a series filters in subsequent outputs. In the present example, the neural network engine 65 further downsamples the output generated by the initial convolution to generate a suboutput from which subfeatures may be extracted. The downsampling of the output generated by the initial convolution is not particularly limited and may include a strided convolution operation or a pooling operation. The pooling operation may be a maximum pooling operation applied to the output in some examples. In other examples, an average pooling operation may be applied to downsample the output. In the present example, the output may provide for the detection of subfeatures which are larger features than those detected in the main output.

Subsequently, the neural network engine 65 applies a series of inverted residual blocks to both the output and the suboutput. The convolution is to be applied separate to the output and the suboutput to generate another output and suboutput, respectively. The output generated by the subsequent convolution may include additional mid-level features.

A series of inverted residual blocks, such as a mobile inverted bottleneck, is applied for both the main branch and the sub branch. The architecture of an inverted residual block involves three general steps. First, the data is expanded to generate a high-dimensional representation of the data by increasing the number of channels. The input into the network may be represented by a matrix with three dimensions representing the width of the image, the height of the image and channel dimension, which represents the colors of the image. Continuing with the example above of an image of 456x256 pixels in RGB format, the input may be represented by a 456x256x3 matrix. By applying a strided 3x3 convolution with 64 filters, the matrix will be 228x128x64. The number of channels will increase accordingly at each subsequent output. The expanded data is then filtered with a depthwise convolution to remove redundant information. The depthwise convolution may be a lightweight convolution that may be efficiently carried out on a device with limited computation computational resources, such as a mobile device. The features extracted during the depthwise convolution may be projected back to a low-dimensional representation using a linear convolution, such as a 1x1 convolution, with a reduced number of filters which may be different from the original channel numbers.

It is to be appreciated by a person of skill in the art that the neural network engine 65 may apply additional convolutions subsequent outputs in an iterative manner to extract additional features. In the present example, the process is iterated three times. However, in other examples, the process may be iterated fewer times or more times.

Upon generation of the final output and suboutput, the neural network engine 65 merges the output and suboutput. The manner by which the output and suboutput is merged is not limited and may involve adding or concatenating the matrices representing each output. It is to be appreciated by a person of skill with the benefit of this description that the suboutput has a lower resolution than the output due to the initial downsampling from the initial convolution. Accordingly, the suboutput is to be upsampled to the same resolution as the final output. The manner by which the suboutput is upsampled is not particularly limited and may include a deconvolution operation, such as learnt upsampling, or an upsampling operation, such as nearest neighbor or bilinear followed by a convolution. Alternatively, the output may be downsampled to the same resolution as the suboutput. The manner by which the output is downsampled is not particularly limited and may include a pooling operation or a strided convolution. For example, the pooling operation may include a maximum pooling or average pooling process.

Using the merged outputs from the backbone, the neural network engine 65 generates joint heatmaps and bone heatmaps for each of the objects in the original raw image data. The heatmaps may be obtained with a regression network containing multiple stages for refinement. Each stage may include a succession of residual outputs to regress the predicted heatmaps using the ground truth heatmaps. In the present example, the regression network includes three stages 350, 360, and 370 to generate heatmaps 380 for outputting to downstream services. In other examples, one, two or more stages may also be used to refine the predicted heatmaps.

The heatmaps may be provided as output from the apparatus 50 to be used to generate skeletons or other representations of the pose of the object. In addition, the heatmaps may be used for other object operations, such as segmentation or three-dimension pose estimation.

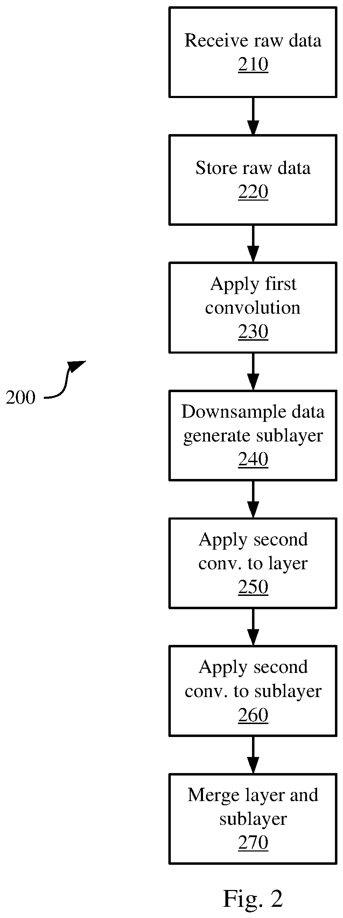

Referring to figure 2, a flowchart of an example method of generating two-dimensional pose estimations from raw images with multiple objects is shown at 200. In order to assist in the explanation of method 200, it will be assumed that method 200 may be performed by the apparatus 50. Indeed, the method 200 may be one way in which the apparatus 50 may be configured. Furthermore, the following discussion of method 200 may lead to a further understanding of the apparatus 50 and its components. In addition, it is to be emphasized, that method 200 may not be performed in the exact sequence as shown, and various blocks may be performed in parallel rather than in sequence, or in a different sequence altogether.

Beginning at block 210, the apparatus 50 receives raw data from an external source via the communications interface 55. In the present example, the raw data includes a representation of multiple objects in an image. In the present example, the raw data represents multiple humans in various poses, who may also be at different depths. The manner by which the objects are represented and the exact format of the two-dimensional image is not particularly limited. For example, the two-dimensional image is received in an RGB format. In other examples, the two-dimensional image be in a different format, such as a raster graphic file or a compressed image file captured and processed by a camera. Once received at the apparatus 50, the raw data is to be stored in the memory storage unit 60 at block 220.

Next, the neural network engine 65 the carries out blocks 230 to 270. Block 230 applies an initial convolution referred to as a the intial STEM output. In the present example, the initial convolution involves applying a 3x3 filter to carry out a strided convolution with a stride of two to the raw data image to generate downsampled data to form an output with lower resolution than the raw data. This output may be used to extract features from the raw data, such as low level features which may include edges.

Block 240 downsamples the output generated at block 230 to generate a suboutput from which subfeatures may be extracted. The downsampling is carried out via a deconvolution operation or a pooling operation. In particular, the present example applies a maximum pooling operation to the output generated at block 230. It is to be appreciated by a person of skill with the benefit of this description that the output generated by block 230 and the suboutput generated by block 240 forms a multi-branch backbone to be processed. In the present example, two branches are used. In other examples, more branches may be formed.

Blocks 250 and 260 apply a convolution to the output generated at block 230 and the suboutput generated at block 240, respectively. In particular, blocks 250 and 260 apply an inverted residual block, such as a mobile inverted bottleneck to the output generated at block 230 and the suboutput generated at block 240, respectively. The resulting output and suboutput may include additional features and subfeatures which may be extracted. In the present example, the neural network engine 65 may apply additional convolutions subsequent outputs and suboutputs in an iterative manner to extract additional features. It is to be appreciated that the data in the outputs form one branch of convolutions beginning with the output generated at block 230. The suboutputs form another branch of convolutions beginning with the suboutput generated at block 240. In this example, the outputs and suboutputs are merged at each iteration via an upsampling process or downsampling process.

After a predetermined number of iterations is carried out, block 270 merges the output and suboutput. The manner by which the output and suboutput is merged is not limited and may involve adding the matrices representing each output. It is to be appreciated by a person of skill with the benefit of this description that the suboutput generated at block 240 has a lower resolution than the output generated at block 230 due to the initial downsampling at block 240. Since the resolution in the two branches are maintained, the suboutput is to be upsampled to the same resolution as the output in the first branch. The manner by which the suboutput is upsampled is not particularly limited and may include a deconvolution operation. Alternatively, the output in the first branch may be downsampled to the same resolution as the suboutput. The merged data may then be used to generate joint heatmaps and bone heatmaps for each of the objects in the original raw image data.

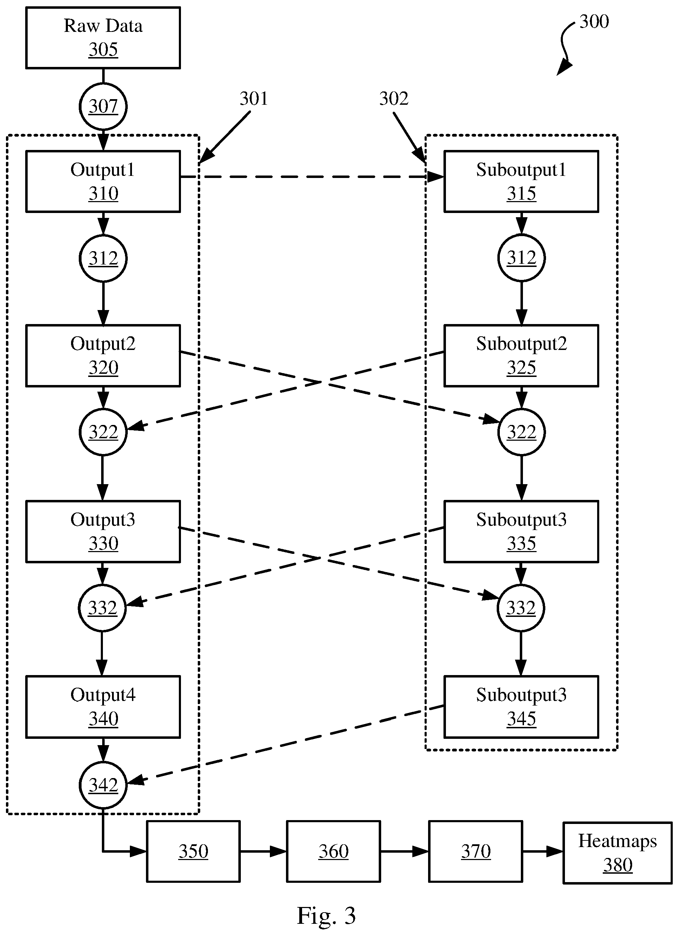

Referring to figure 3, a flowchart of an example architecture 300 to generate two-dimensional pose estimations from a raw image with multiple objects is shown. In order to assist in the explanation of architecture 300, it will be assumed it is executed by the neural network engine 65. The following discussion of architecture 300 may lead to a further understanding of the operation of the neural network engine 65.

In the present example, raw data 305 is received by the neural network engine 65. The neural network engine 65 applies a convolution 307 to the raw data 305. In this example, the convolution 307 involves applying a 3x3 filter to carry out a strided convolution with a stride of two to the raw data 305 to generate downsampled data to form a output 310 with lower resolution than the raw data 305. The data output 310 is then further downsampled using a maximum pooling operation to generate a suboutput 315. It is to be appreciated by a person of skill with the benefit of this description that the data output 310 is the start of a high resolution branch 301 for processing and the data suboutput 315 is the start of a low resolution branch 302 for processing.

The neural network engine 65 then applies the first series of inverted residual blocks 312 to the data output 310 to generate the data output 320. In addition, the neural network engine 65 also applies the first series of inverted residual blocks 312 to the data suboutput 315 to generate the data suboutput 325. The data suboutput 325 is then upsampled and merged with the data output 320. Another series of inverted residual blocks 322 is applied to the merged data in the high resolution branch 301 to generate the next data output 330. Similarly, the data output 320 is downsampled and merged with the data suboutput 325 in the low resolution branch 302. The series of inverted residual blocks 322 is applied to this merged data in the low resolution branch 302 branch to generate the next data output 335. In the present example, the process is repeated with inverted residual blocks 332 to generate the data output 340 and the data suboutput 345.

In the present example, the data output 340 and the data suboutput 345 is the final iteration and the data suboutput 345 is upsampled and merged with the data output 340 applying the inverted residual convolution 342.

It is to be appreciated by a person of skill with the benefit of this description that variations are contemplated. For example, instead of upsampling and downsampling for each output and suboutput, the branches 301 and 302 may continue processing independently until the end when they are merged.

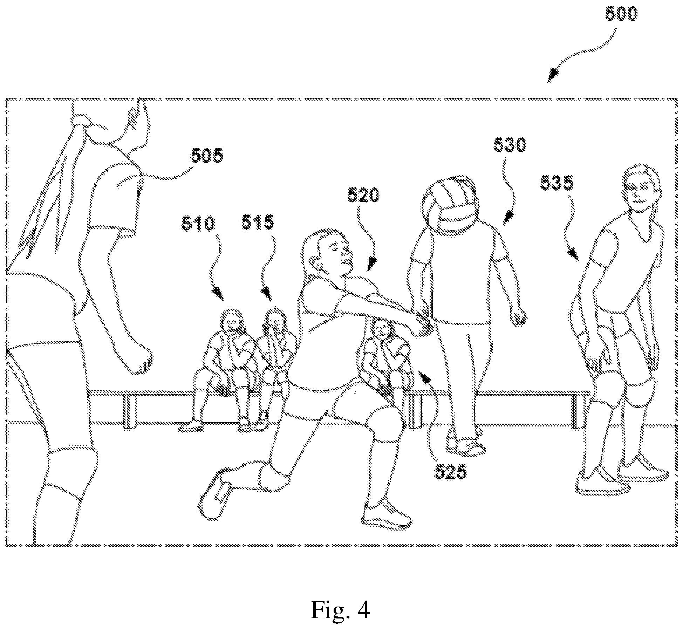

Referring to figure 4, an example of an image 500 represented by raw data is generally shown. In the present example, the objects in the raw image are people. The image 500 is a sport scene with multiple objects 505, 510, 515, 520, 525, 530, and 535. The object 505 is shown to be close to the camera and the objects 510, 515, and 525 are further away and thus appear smaller in the two-dimensional image. Furthermore, the object 530 is partially obstructed by a non-target object, the ball.

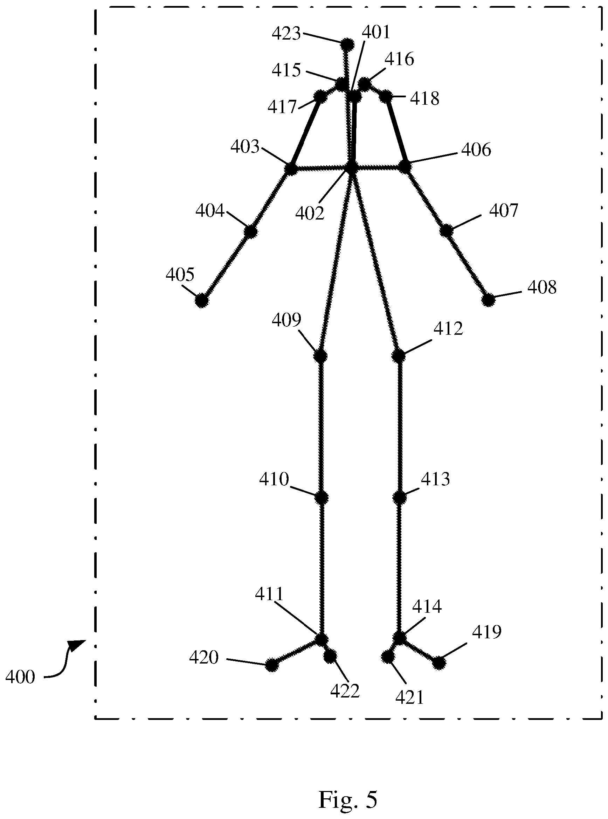

In the present example, the apparatus 50 is configured to identify and generate heatmaps for twenty-three predefined joints. It is to be appreciated by a person of skill with the benefit of this description that the number of joints is not particularly limited. For example, the apparatus 50 may be configured to generate heatmaps for more joints or fewer joints depending on the target resolution as well as the computational resources available. Referring to figure 5, an illustration of the predetermined joints and bones for a person in an A-pose in the present example is shown at 400. In the present example, the joints are listed in Table 1 below.

**TABLE 1**

| **Reference Character** | **Joint Name** |
|---|---|
| 401 | Nose |
| 402 | Neck |
| 403 | Right Shoulder |
| 404 | Right Elbow |
| 405 | Right Wrist |
| 406 | Left Shoulder |
| 407 | Left Elbow |
| 408 | Left Wrist |
| 409 | Right Hip |
| 410 | Right Knee |
| 411 | Right Ankle |
| 412 | Left Hip |
| 413 | Left Knee |
| 414 | Left Ankle |
| 415 | Right Eye |
| 416 | Left Eye |
| 417 | Right Ear |
| 418 | Left Ear |
| 419 | Left Toe |
| 420 | Right Toe |
| 421 | Left Heel |
| 422 | Right Heel |
| 423 | Head Top |

Furthermore, a bone structure may be predetermined as well. In this example, bones may be defined to connect two joints. Accordingly bone heatmaps may also be generated for each predefined bone. In the present example, separate heatmaps are generated for the x-direction and the y-direction for each bone. Since the bone connects two joints, the magnitude in the heatmaps correspond to a probability of a bone in a the x-direction or the y-directions. For example, the bone connecting the neck 402 to the right shoulder 403 will have a high value in the x-direction bone heatmap and have a low values in the y-direction bone heatmap for a standing person. As another example, the bone connecting the right hip 409 to the right knee 410 will have a high value in the y-direction bone heatmap and have a low values in the x-direction bone heatmap for a standing person. In the present example, there are 48 bone heatmaps that are predefined. In particular, there are 24 pairs of j oint connections where each pair includes an x-direction heatmap and a y-direction heatmap. In the present example, the predefined bones are listed in Table 2 below.

**TABLE 2**

| **Bone** |
|---|
| Neck 402 to Right Hip 409 |
| Right Hip 409 to Right Knee 410 |
| Right Knee 410 to Right Ankle 411 |
| Neck 402 to Left Hip 412 |
| Left Hip 412 to Left Knee 413 |
| Left Knee 413 to Left Ankle 414 |
| Neck 402 to Right Shoulder 403 |
| Right Shoulder 403 to Right Elbow 404 |
| Right Elbow 404 to Right Wrist 405 |
| Right Shoulder 403 to Right Ear 417 |
| Neck 402 to Left Shoulder 406 |
| Left Shoulder 406 to Left Elbow 407 |
| Left Elbow 407 to Left Wrist 408 |
| Left Shoulder 406 to Left Ear 418 |
| Neck 402 to Nose 401 |
| Nose 401 to Right Eye 415 |
| Nose 401 to Left Eye 416 |
| Right Eye 415 to Right Ear 417 |
| Left Eye 416 to Left Ear 418 |
| Left Ankle 414 to Left Toe 419 |
| Right Ankle 411 to Right Toe 420 |
| Left Ankle 414 to Left Heel 421 |
| Right Ankle 411 to Right Heel 422 |
| Neck 402 to Head Top 423 |

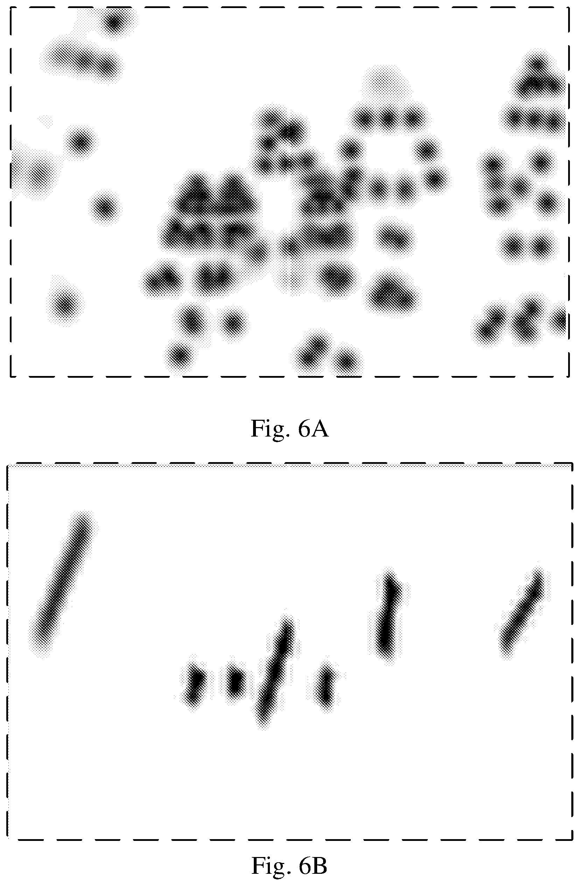

Once the apparatus 50 processes the raw data image 500, joint heatmaps and bone heatmaps may be generated. In the present example, it is to be appreciated with the benefit of this description that the joint heatmaps may be combined to generate a representation of the joints as shown in figure 6A. The manner by which the joint heatmaps are combined is not limited and may be a sum of the joint heatmaps provided by the apparatus 50 when overlaid on top of each other. Referring to figure 6B, a bone heatmap of the bone between the neck 402 and the right hip 409 for the y-direction is shown. Since the bone heatmaps provided by the apparatus 50 includes more complicated maps, overlaying multiple bone heatmaps may not generate a useful combination as for illustrative purposes. Accordingly, a single bone heatmap is shown out of the 48 bone heatmaps in figure 6B.

After generating the heatmaps, it is to be appreciated by a person of skill with the benefit of this description that the heatmaps may be used to generate skeletons to represent people in a two-dimensional image. The manner by which skeletons are generated is not particularly limited, and may include searching for peak maximums in the heatmaps and clustering joint locations.

Various advantages will now become apparent to a person of skill in the art. In particular, the apparatus 50 provides an architecture to determine two-dimensional pose estimation in a computationally efficient manner. In particular, the architecture has been demonstrated on computational resources limited devices, such as a portable electronic device like a smartphone. The multi-branch approach further improves the accuracy of the two-dimensional pose estimations. Therefore, the apparatus 50 estimates two-dimensional poses robustly with less computational load facilitating higher frame rates or lighter hardware and be useful to build real time systems that includes vision based human pose estimation.

It should be recognized that features and aspects of the various examples provided above may be combined into further examples that also fall within the scope of the present disclosure.

## Claims

1. An apparatus (50) comprising:
a communications interface (55) at which to receive, from an image source (500), raw image data (305) that includes a representation of a first object and a second object;
a memory storage unit (60) in which to store the raw image data (305); and
a neural network engine (65) that includes a higher-resolution branch (301) and a lower-resolution branch (302) and that is configured to:
apply, by the higher-resolution branch (301) to the raw image data (305), a first convolution (307) to extract a first set of features that is representative of a first output (310),
downsample the first output (310) to extract a first set of subfeatures that is representative of a first suboutput (315),
apply, by the higher-resolution branch (301) to the first output (310), a second convolution to extract a second set of features that is representative of a second output (320),
apply, by the lower-resolution branch (302) to the first suboutput (315), the second convolution to extract a second set of subfeatures that is representative of a second suboutput (325), and
merge the second output (320) and the second suboutput (325) to generate (i) one or more first joint heatmaps of the first object, (ii) one or more joint heatmaps of the second object, (iii) one or more first bone heatmaps of the first object, and (iv) one or more second bone heatmaps of the second object.

2. The apparatus (50) of claim 1, wherein the second suboutput (325) is upsampled and merged with the second output (320) to generate a first merged output (330).

3. The apparatus (50) of claim 2, wherein the second output (320) is downsampled and merged with the second suboutput (325) to generate a first merged suboutput (335).

4. The apparatus (50) of claim 3, wherein the neural network engine (65) is further configured to:
apply a third convolution to the first merged output (330) to generate a third output (340), and
apply the third convolution to the first merged suboutput (335) to generate a third suboutput (345).

5. The apparatus (50) of any one of claims 1 to 4, wherein the first set of features are low level features.

6. The apparatus (50) of claim 5, wherein the low level features are edges.

7. The apparatus (50) of any one of claims 1 to 6, wherein the neural network engine (65) downsamples with a maximum pooling operation, and wherein the neural network engine (65) upsamples with a deconvolution operation.

8. The apparatus (50) of any one of claims 1 to 7, wherein second output (320) and the second suboutput (325) are merged to generate:
(i) a first plurality of joint heatmaps of the first object, wherein each of the first plurality of joint heatmaps corresponds to a different joint of the first object,
(ii) a second plurality of joint heatmaps of the second object, wherein each of the second plurality of joint heatmaps corresponds to a different joint of the second object,
(iii) the one or more first bone heatmaps of the first object, wherein each of the one or more first bone heatmaps corresponds to a different pair of the first plurality of joint heatmaps, and
(iv) the one or more second bone heatmaps of the second object, wherein each of the one or more second bone heatmaps corresponds to a different pair of the second plurality of joint heatmaps.

9. A method (200) comprising:
receiving (210) raw image data (305) from an image source (500) via a communications interface (55), wherein the raw image data (305) includes a representation of a first object and a second object;
storing (220) the raw image data (305) in a memory storage unit (60);
applying (230), by a higher-resolution branch (301) of a neural network engine (65) to the raw image data (305), a first convolution (307) to extract a first set of features that is representative of a first output (310);
downsampling (240) the first output (310) to extract a first set of subfeatures that is representative of a first suboutput (315);
applying (250), by the higher-resolution branch (301) of the neural network engine (65) to the first output (310), a second convolution to extract a second set of features that is representative of a second output (320);
applying (260), by a lower-resolution branch (302) of the neural network engine (65) to the first suboutput (315), the second convolution to extract a second set of subfeatures that is representative of a second suboutput (325); and
merging (270) the second output (320) and the second suboutput (325) to generate (i) one or more first joint heatmaps of the first object (ii) one or more joint heatmaps of the second object, (iii) one or more first bone heatmaps of the first object, and (iv) one or more second bone heatmaps of the second object.

10. The method (200) of claim 9, further comprising upsampling and merging the second suboutput (325) with the second output (320) to generate a first merged output (330).

11. The method (200) of claim 10, further comprising downsampling and merging the second output (320) with the second suboutput (325) to generate a first merged suboutput (335).

12. The method (200) of claim 11, further comprising:
applying a third convolution to the first merged output (330) to generate a third output (340), and
applying the third convolution to the first merged suboutput (335) to generate a third suboutput (345).

13. The method (200) of any one of claims 9 to 12, wherein applying the first convolution (307) comprises downsampling the raw image data (305) to extract low level features.

14. The method (200) of claim 13, wherein the low level features are edges.

15. The method (200) of any one of claims 9 to 14, wherein downsampling comprises executing a maximum pooling operation, and wherein upsampling comprises applying a deconvolution operation.

## Patentansprüche

1. Einrichtung (50), umfassend:
eine Kommunikationsschnittstelle (55), an der von einer Bildquelle (500) Rohbilddaten (305) zu empfangen sind, die eine Darstellung eines ersten Objekts und eines zweiten Objekts beinhalten;
eine Speichereinheit (60), in der die Rohbilddaten (305) zu speichern sind; und
eine Engine für neuronale Netze (65), die einen Zweig mit höherer Auflösung (301) und einen Zweig mit geringerer Auflösung (302) beinhaltet und die konfiguriert ist zum:
Anwenden, durch den Zweig mit höherer Auflösung (301) auf die Rohbilddaten (305), einer ersten Faltung (307), um eine erste Reihe von Merkmalen zu extrahieren, die repräsentativ für eine erste Ausgabe (310) sind,
Verkleinern der ersten Ausgabe (310), um eine erste Reihe von untergeordneten Merkmalen zu extrahieren, die repräsentativ für eine erste Unterausgabe (315) sind,
Anwenden, durch den Zweig mit höherer Auflösung (301) auf die erste Ausgabe (310), einer zweiten Faltung, um eine zweite Reihe von Merkmalen zu extrahieren, die repräsentativ für eine zweite Ausgabe (320) sind,
Anwenden, durch den Zweig mit geringerer Auflösung (302) auf die erste Unterausgabe (315), der zweiten Faltung, um eine zweite Reihe von untergeordneten Merkmalen zu extrahieren, die repräsentativ für eine zweite Unterausgabe (325) sind, und
Zusammenführen der zweiten Ausgabe (320) und der zweiten Unterausgabe (325), um (i) eine oder mehrere erste Gelenkheatmaps des ersten Objekts, (ii) eine oder mehrere Gelenkheatmaps des zweiten Objekts, (iii) eine oder mehrere erste Knochenheatmaps des ersten Objekts und (iv) eine oder mehrere zweite Knochenheatmaps des zweiten Objekts zu generieren.

2. Einrichtung (50) nach Anspruch 1, wobei die zweite Unterausgabe (325) vergrößert und mit der zweiten Ausgabe (320) zusammengeführt wird, um eine erste zusammengeführte Ausgabe (330) zu generieren.

3. Einrichtung (50) nach Anspruch 2, wobei die zweite Ausgabe (320) verkleinert und mit der zweiten Unterausgabe (325) zusammengeführt wird, um eine erste zusammengeführte Unterausgabe (335) zu generieren.

4. Einrichtung (50) nach Anspruch 3, wobei die Engine für neuronale Netze (65) ferner konfiguriert ist zum:
Anwenden einer dritten Faltung auf die erste zusammengeführte Ausgabe (330), um eine dritte Ausgabe (340) zu generieren, und
Anwenden der dritten Faltung auf die erste zusammengeführte Unterausgabe (335), um eine dritte Unterausgabe (345) zu generieren.

5. Einrichtung (50) nach einem der Ansprüche 1 bis 4, wobei es sich bei der ersten Reihe von Merkmalen um einfache Merkmale handelt.

6. Einrichtung (50) nach Anspruch 5, wobei es sich bei den einfachen Merkmalen um Kanten handelt.

7. Einrichtung (50) nach einem der Ansprüche 1 bis 6, wobei die Engine für neuronale Netze (65) mit einem Maximumpoolingvorgang verkleinert und wobei die Engine für neuronale Netze (65) mit einem Entfaltungsvorgang vergrößert.

8. Einrichtung (50) nach einem der Ansprüche 1 bis 7, wobei die zweite Ausgabe (320) und die zweite Unterausgabe (325) zusammengeführt werden zum Generieren:
(i) einer ersten Vielzahl an Gelenkheatmaps des ersten Objekts, wobei jede der ersten Vielzahl an Gelenkheatmaps einem anderen Gelenk des ersten Objekts entspricht,
(ii) einer zweiten Vielzahl an Gelenkheatmaps des zweiten Objekts, wobei jede der zweiten Vielzahl an Gelenkheatmaps einem anderen Gelenk des zweiten Objekts entspricht,
(iii) der einen oder der mehreren ersten Knochenheatmaps des ersten Objekts, wobei jede der einen oder der mehreren ersten Knochenheatmaps einem anderen Paar der ersten Vielzahl an Gelenkheatmaps entspricht, und
(iv) der einen oder der mehreren zweiten Knochenheatmaps des zweiten Objekts, wobei jede der einen oder der mehreren zweiten Knochenheatmaps einem anderen Paar der zweiten Vielzahl an Gelenkheatmaps entspricht.

9. Verfahren (200), umfassend:
Empfangen (210) von Rohbilddaten (305) von einer Bildquelle (500) über eine Kommunikationsschnittstelle (55), wobei die Rohbilddaten (305) eine Darstellung eines ersten Objekts und eines zweiten Objekts beinhalten;
Speichern (220) der Rohbilddaten (305) in einer Speichereinheit (60);
Anwenden (230), durch einen Zweig mit höherer Auflösung (301) einer Engine für neuronale Netze (65) auf die Rohbilddaten (305), einer ersten Faltung (307), um eine erste Reihe von Merkmalen zu extrahieren, die repräsentativ für eine erste Ausgabe (310) sind;
Verkleinern (240) der ersten Ausgabe (310), um eine erste Reihe von untergeordneten Merkmalen zu extrahieren, die repräsentativ für eine erste Unterausgabe (315) sind;
Anwenden (250), durch den Zweig mit höherer Auflösung (301) der Engine für neuronale Netze (65) auf die erste Ausgabe (310), einer zweiten Faltung, um eine zweite Reihe von Merkmalen zu extrahieren, die repräsentativ für eine zweite Ausgabe (320) sind;
Anwenden (260), durch einen Zweig mit geringerer Auflösung (302) der Engine für neuronale Netze (65) auf die erste Unterausgabe (315), der zweiten Faltung, um eine zweite Reihe von untergeordneten Merkmalen zu extrahieren, die repräsentativ für eine zweite Unterausgabe (325) sind; und
Zusammenführen (270) der zweiten Ausgabe (320) und der zweiten Unterausgabe (325), um (i) eine oder mehrere erste Gelenkheatmaps des ersten Objekts, (ii) eine oder mehrere Gelenkheatmaps des zweiten Objekts, (iii) eine oder mehrere erste Knochenheatmaps des ersten Objekts und (iv) eine oder mehrere zweite Knochenheatmaps des zweiten Objekts zu generieren.

10. Verfahren (200) nach Anspruch 9, ferner umfassend das Vergrößern und Zusammenführen der zweiten Unterausgabe (325) mit der zweiten Ausgabe (320), um eine erste zusammengeführte Ausgabe (330) zu generieren.

11. Verfahren (200) nach Anspruch 10, ferner umfassend das Verkleinern und Zusammenführen der zweiten Ausgabe (320) mit der zweiten Unterausgabe (325), um eine erste zusammengeführte Unterausgabe (335) zu generieren.

12. Verfahren (200) nach Anspruch 11, ferner umfassend:
Anwenden einer dritten Faltung auf die erste zusammengeführte Ausgabe (330), um eine dritte Ausgabe (340) zu generieren, und
Anwenden der dritten Faltung auf die erste zusammengeführte Unterausgabe (335), um eine dritte Unterausgabe (345) zu generieren.

13. Verfahren (200) nach einem der Ansprüche 9 bis 12, wobei das Anwenden der ersten Faltung (307) das Verkleinern der Rohbilddaten (305) umfasst, um einfache Merkmale zu extrahieren.

14. Verfahren (200) nach Anspruch 13, wobei es sich bei den einfachen Merkmalen um Kanten handelt.

15. Verfahren (200) nach einem der Ansprüche 9 bis 14, wobei das Verkleinern das Ausführen eines Maximumpoolingvorgangs umfasst und wobei das Vergrößern das Anwenden eines Entfaltungsvorgangs umfasst.

## Revendications

1. Appareil (50) comprenant :
une interface de communication (55) à hauteur de laquelle sont reçues, en provenance d'une source d'images (500), des données d'image brutes (305) qui intègrent une représentation d'un premier objet ainsi que d'un deuxième objet ;
une unité de stockage de mémoire (60) dans laquelle sont stockées les données d'image brutes (305) ; et
un moteur de réseau neuronal (65), qui intègre une branche à plus haute résolution (301) ainsi qu'une branche à plus basse résolution (302), et qui est configuré pour :
réaliser, à travers la branche à plus haute résolution (301), une première convolution (307) des données d'image brutes (305), pour extraire un premier ensemble de caractéristiques qui est représentatif d'une première sortie (310),
effectuer un sous-échantillonnage de la première sortie (310) pour extraire un premier ensemble de sous-caractéristiques qui est représentatif d'une première sous-sortie (315),
réaliser, à travers la branche à plus haute résolution (301), une deuxième convolution de la première sortie (310), pour extraire un deuxième ensemble de caractéristiques qui est représentatif d'une deuxième sortie (320),
réaliser, à travers la branche à plus basse résolution (302), la deuxième convolution de la première sous-sortie (315), pour extraire un deuxième ensemble de sous-caractéristiques qui est représentatif d'une deuxième sous-sortie (325), et
fusionner la deuxième sortie (320) et la deuxième sous-sortie (325) pour générer (i) une ou plusieurs premières cartes de chaleur d'articulations du premier objet, (ii) une ou plusieurs cartes de chaleur d'articulations du deuxième objet, (iii) une ou plusieurs premières cartes de chaleur d'os du premier objet, et (iv) une ou plusieurs deuxièmes cartes de chaleur d'os du deuxième objet.

2. Appareil (50) selon la revendication 1, dans lequel la deuxième sous-sortie (325) est sur-échantillonnée puis fusionnée avec la deuxième sortie (320) pour générer une première sortie fusionnée (330).

3. Appareil (50) selon la revendication 2, dans lequel la deuxième sortie (320) est sous-échantillonnée puis fusionnée avec la deuxième sous-sortie (325) pour générer une première sous-sortie fusionnée (335).

4. Appareil (50) selon la revendication 3, dans lequel le moteur de réseau neuronal (65) est en outre configuré pour :
réaliser une troisième convolution de la première sortie fusionnée (330) pour générer une troisième sortie (340), et
réaliser la troisième convolution de la première sous-sortie fusionnée (335) pour générer une troisième sous-sortie (345).

5. Appareil (50) selon l'une quelconque des revendications 1 à 4, dans lequel le premier ensemble de caractéristiques sont des caractéristiques de faible niveau.

6. Appareil (50) selon la revendication 5, dans lequel les caractéristiques de faible niveau sont des contours.

7. Appareil (50) selon l'une quelconque des revendications 1 à 6, dans lequel le moteur de réseau neuronal (65) effectue un sous-échantillonnage en procédant à une opération de max pooling, et dans lequel le moteur de réseau neuronal (65) effectue un sur-échantillonnage en procédant à une opération de déconvolution.

8. Appareil (50) selon l'une quelconque des revendications 1 à 7, dans lequel la deuxième sortie (320) et la deuxième sous-sortie (325) sont fusionnées pour générer :
(i) une première pluralité de cartes de chaleur d'articulations du premier objet, dans lequel chaque carte de chaleur d'articulations de la première pluralité de cartes de chaleur d'articulations correspond à une articulation différente du premier objet,
(ii) une deuxième pluralité de cartes de chaleur d'articulations du deuxième objet, dans lequel chaque carte de chaleur d'articulations de la deuxième pluralité de cartes de chaleur d'articulations correspond à une articulation différente du deuxième objet,
(iii) la première carte de chaleur d'os ou plusieurs premières cartes de chaleur d'os du premier objet, dans lequel chacune de la première ou des plusieurs premières cartes de chaleur d'os correspond à une paire différente de la première pluralité de cartes de chaleur d'articulations, et
(iv) la deuxième carte de chaleur d'os ou plusieurs deuxièmes cartes de chaleur d'os du deuxième objet, dans lequel chacune de la ou des plusieurs deuxièmes cartes de chaleur d'os correspond à une paire différente de la deuxième pluralité de cartes de chaleur d'articulations.

9. Procédé (200) consistant à :
recevoir (210) des données d'image brutes (305), en provenance d'une source d'images (500), à travers une interface de communication (55), dans lequel les données d'image brutes (305) intègrent une représentation d'un premier objet et d'un deuxième objet ;
stocker (220) les données d'image brutes (305) dans une unité de stockage de mémoire (60) ;
réaliser (230), à travers une branche à plus haute résolution (301) d'un moteur de réseau neuronal (65), une première convolution (307) des données d'image brutes (305), pour extraire un premier ensemble de caractéristiques qui est représentatif d'une première sortie (310),
effectuer un sous-échantillonnage (240) de la première sortie (310) pour extraire un premier ensemble de sous-caractéristiques qui est représentatif d'une première sous-sortie (315) ;
réaliser (250), à travers la branche à plus haute résolution (301) du moteur de réseau neuronal (65), une deuxième convolution de la première sortie (310), pour extraire un deuxième ensemble de caractéristiques qui est représentatif d'une deuxième sortie (320) ;
réaliser (260), à travers une branche à plus basse résolution (302) du moteur de réseau neuronal (65), la deuxième convolution de la première sous-sortie (315), pour extraire un deuxième ensemble de sous-caractéristiques qui est représentatif d'une deuxième sous-sortie (325) ; et
fusionner (270) la deuxième sortie (320) et la deuxième sous-sortie (325) pour générer (i) une ou plusieurs premières cartes de chaleur d'articulations du premier objet, (ii) une ou plusieurs cartes de chaleur d'articulations du deuxième objet, (iii) une ou plusieurs premières cartes de chaleur d'os du premier objet, et (iv) une ou plusieurs deuxièmes cartes de chaleur d'os du deuxième objet.

10. Procédé (200) selon la revendication 9, consistant en outre à sur-échantillonner et à fusionner la deuxième sous-sortie (325) et la deuxième sortie (320) pour générer une première sortie fusionnée (330).

11. Procédé (200) selon la revendication 10, consistant en outre à sous-échantillonner et à fusionner la deuxième sortie (320) et la deuxième sous-sortie (325) pour générer une première sous-sortie fusionnée (335).

12. Procédé (200) selon la revendication 11, consistant en outre à :
réaliser une troisième convolution de la première sortie fusionnée (330) pour générer une troisième sortie (340), et
réaliser la troisième convolution de la première sous-sortie fusionnée (335) pour générer une troisième sous-sortie (345).

13. Procédé (200) selon l'une quelconque des revendications 9 à 12, dans lequel la réalisation de la première convolution (307) consiste à sous-échantillonner les données d'image brutes (305) pour extraire des caractéristiques de faible niveau.

14. Procédé (200) selon la revendication 13, dans lequel les caractéristiques de faible niveau sont des contours.

15. Procédé (200) selon l'une quelconque des revendications 9 à 14, dans lequel le sous-échantillonnage consiste à effectuer une opération de max pooling, et dans lequel le sur-échantillonnage consiste à procéder à une opération de déconvolution.
